# EUROPÄISCHE PATENTANMELDUNG

(11) **EP 3 169 011 A1**
(43) Veröffentlichungstag der Anmeldung: **17.05.2017**
(21) Anmeldenummer: 16198297.0
(22) Anmeldetag: 10.11.2016
(51) Int. Cl.: H04J 14/02, H04L 12/753

(54) **VERFAHREN ZUR AUSLEGUNG FILTERLOSER OPTISCHER NETZE**

(30) Priorität: 10.11.2015 DE 102015119347
(71) Anmelder: Deutsche Telekom AG, 53113 Bonn (DE)
(72) Erfinder: WISSEL, Felix, 64372 Ober-Ramstadt (DE); MICHAELIS, Niklas, 64289 Darmstadt (DE)
(74) Vertreter: Brandt & Nern Patentanwälte

(57) **Zusammenfassung**

Die Erfindung betrifft ein Verfahren zur fehlertoleranten Auslegung filterloser optischer Netze im Hinblick auf die innerhalb einer bestehenden optischen Netzwerktopologie zu verwendenden Glasfaserkabeltrassen. Gemäß dem Verfahren wird die bestehende Netzwerktopologie in einem Graphen abgebildet, in welchem die Netzwerkknoten durch Knoten (1₁ - 1ₙ) und die Glasfaserkabeltrassen durch Kanten (2₁ - 2ₙ) dargestellt werden. In Systemen zur Verwaltung der Topologie bestehende Datenstrukturen werden durch je einen Zähler für jede Kante (2₁ - 2ₙ) ergänzt. In dem Graphen wird zunächst ein optimierter Arbeitsspannbaum aufgespannt, welcher alle Knoten (1₁ - 1n) des Graphen schleifenfrei miteinander verbindet. Die Zähler der hierfür verwendeten Kanten (2₁ - 2ₙ) werden inkrementiert. Danach werden, bis ein maximaler Zählerstand nicht mehr überschritten wird, ebenfalls unter Inkrementieren der Zähler verwendeter Kanten, ein oder mehrere optimierte, schleifenfreie Ersatzspannbäume erstellt. Dies geschieht mit der Maßgabe, dass Knoten (1₁ - 1ₙ) nur dann unter Verwendung bereits zuvor zur Ausbildung eines Spannbaums genutzter Kanten (2₁ - 2ₙ) mit dem jeweils erstellten Ersatzspannbaum verbunden werden, wenn diese unter ausschließlicher Verwendung bisher nicht genutzter Kanten (2₁ - 2ₙ) nicht verbindbar sind, wobei erforderlichenfalls solche bereits genutzten Kanten (2₁ - 2ₙ) verwendet werden, die bis dahin den niedrigsten Zählerwert aufweisen.

## Beschreibung

Die Erfindung bezieht sich auf die Auslegung filterloser optischer Netze. Sie betrifft ein Verfahren für eine glasfasersparende Auslegung derartiger Netze im Hinblick auf die für ihre Realisierung zu verwendenden Glasfaserkabeltrassen einer bereits bestehenden optischen Netzwerktopologie, wobei diese Auslegung fehlertolerant bezüglich in der bestehenden Netzwerktopologie möglicherweise auftretender Unterbrechungen erfolgen soll.

Nach dem Stand der Technik basieren die bereits realisierten optischen Transportnetze für die Telekommunikation, so insbesondere auch optische Netze zur Realisierung eines Backbones, zumeist auf dem WDM-Verfahren (Wavelength Division Multiplex). Hierbei werden mehrere Kanäle, in welchen Nutzdaten der Telekommunikation mittels eines optischen Trägersignals übertragen werden, parallel zueinander in einer Glasfaser geführt. Die Kanäle unterscheiden sich durch die jeweilige Frequenz beziehungsweise Wellenlänge ihres optischen Trägersignals.

Um die Nutzdaten in einer solchen zuvor beschriebenen Struktur des Standes der Technik von einem Punkt zu einem anderen übertragen zu können, also gewissermaßen eine temporäre Punkt-zu-Punkt-Verbindung zwischen zwei Standorten des optischen Netzwerks aufbauen zu können, ist es erforderlich, an den einzelnen Standorten WDM-Multiplexer und WDM-Demultiplexer vorzusehen, um das jeweilige Trägersignal mit den zu übertragenden Nutzdaten am Ausgangsstandort in das optische Netz einkoppeln und am Empfangsstandort aus diesem auskoppeln zu können. Bei den angesprochenen Multiplexern und Demultiplexern handelt es sich um Filterelemente, über welche die zu übertragenden Daten wellenlängenabhängig in Bezug auf ihr Trägersignal dem optischen Netz, also beispielsweise einem Backbone, zugeführt oder wieder aus diesem herausgefiltert werden. Hierbei stellen diese Filterelemente innerhalb des optischen Netzes einen beträchtlichen Kostenfaktor dar.

Eine demgegenüber aus technischer Sicht etwas flexiblere Weiterbildung basiert auf an den Standorten (an den Netzwerkknoten) anzuordnenden Netzelementen in Form sogenannter ROADM (Reconfigurable Optical Add Drop Multiplexer). Bei den ROADMs handelt es sich um eine Art Prisma, mittels welchem das über eine Glasfaser übertragene Licht in die einzelnen, in der Faser für die Datenübertragung genutzten Wellenlängen der Trägersignale aufgespalten wird. Eine Einspeisung der einzelnen Trägersignale mit unterschiedlicher Wellenlänge erfolgt mittels der ROADMs dadurch, dass die einzelnen Farben durch kleine Spiegel gezielt in in unterschiedlicher Richtung verlaufende Glasfasern eingespeist werden. An jedem ROADM gibt es mindestens einen Bereich mit Add/Drop-Ports zur Anbindung anderer beziehungsweise peripherer Netze, wie Zugangsnetze, durch Einspeisen und Auskoppeln von optischen Trägersignalen unterschiedlicher Wellenlänge. Die Richtungen, in die Wellenlängen abgeführt werden können, werden durch die Angabe "Grad" eines ROADMs gekennzeichnet.

Zwar ist die zuletzt beschriebene Technik, wie bereits ausgeführt, flexibler, jedoch sind auch die dafür an den einzelnen Standorten beziehungsweise Netzwerkknoten vorzusehenden ROADMs vergleichsweise teuer. Daher wird seit Kurzem ein neuartiger Ansatz für den Transport optischer Signale über ein Glasfasernetz diskutiert. Entsprechend diesem Ansatz werden die die Nutzdaten tragenden optischen Trägersignale (Lichtsignale) nicht mehr nur an den eigentlichen Empfänger - das heißt an den Netzwerkknoten, bei welchem diese Signale aus dem Netzwerk wieder ausgekoppelt werden - ausgesendet, sondern an alle Empfänger, respektive Netzwerkknoten, einer Netzwerktopologie. Mithin werden alle Trägersignale mit Nutzdaten in der Art eines Broadcast jeweils an alle Empfänger, das heißt an alle Netzwerkknoten der aus Netzwerkknoten und diese miteinander verbindenden Glasfaserkabeltrassen bestehenden Netzwerktopologie ausgesendet. Verarbeitet werden diese Signale jedoch nur durch das tatsächlich für ihren Empfang bestimmte Netzelement am jeweiligen Netzwerkknoten, welches dazu auf die entsprechende Wellenlänge des von ihm zu empfangenden Trägersignals eingestellt wird. Allen anderen Netzwerkelementen, respektive Netzwerkknoten, ist ein Empfang und eine Weiterverarbeitung desselben Trägersignals im Sinne eines Auskoppelns mangels richtiger Empfangseinstellung nicht möglich. Im Hinblick darauf wird auch von einem "kohärenten Empfang" gesprochen, da formal betrachtet ein von einem Netzwerkknoten ausgesendetes Trägersignals zwar durch alle anderen Netzwerkknoten der Netzwerktopologie empfangen wird, aber lediglich von einem dieser Netzwerkknoten in dem Sinne empfangen wird, dass seine Weiterverarbeitung, nämlich seine Auskopplung aus der Netzwerktopologie, ermöglicht ist.

Im Hinblick darauf, dass im Falle der zuletzt beschriebenen Vorgehensweise an den Netzwerkknoten weder WDM-Multiplexer und WDM-Demultiplexer noch ROADMs erforderlich sind, spricht man bei in dieser Weise realisierten optischen Netzen auch von filterlosen Netzen. Auch in einem filterlosen Netz soll dabei eine Punkt- zu-Punkt-Verbindung zwischen beliebigen Netzwerkknoten des Netzes ermöglicht sein. Das heißt, in dem betreffenden optischen Netz sind alle Netzwerkknoten miteinander verbunden, was jedoch nicht gleichbedeutend damit ist, dass jeder Netzwerkknoten mit jedem anderen Netzwerkknoten unmittelbar verbunden wäre.

Beim Design eines solchen filterlosen optischen Netzes, also der Realisierung eines solchen Netzes innerhalb einer bereits bestehenden optischen Netzwerktopologie, ist aufgrund des Verzichts auf Filter aber noch eine andere Randbedingung einzuhalten. Diese besteht darin, dass das filterlose optische Netz schleifenfrei auszubilden ist. Dies meint, dass ein von einem Netzwerkknoten ausgesendetes Trägersignal mit einer bestimmten Wellenlänge nicht wieder zu demselben Netzwerkknoten zurückgelangen darf. Darüber hinaus ist es im Sinne der Schleifenfreiheit unzulässig, wenn ein ausgesendetes Trägersignal mit Nutzdaten auf zwei oder mehr Wegen beim selben Empfänger ankommt, da dieser dann aufgrund auftretender Interferenzen der über die verschiedenen Wege eingehenden Signale keine Nutzdaten mehr rekonstruieren kann. Andererseits soll aber das optische Netz auch fehlertolerant sein. Dabei soll eine Punkt-zu-Punkt-Verbindung zwischen einem beliebigen ersten Netzwerkknoten und einem beliebigen zweiten Netzwerkknoten derart realisierbar sein, dass auch im Falle einer eventuellen Störung oder Unterbrechung einer Glasfaserkabeltrasse die von dem ersten Netzwerkknoten ausgesendeten Daten bei dem zweiten Netzwerkknoten ankommen.

Entsprechendes wäre aber unter Einhaltung der Randbedingung der Schleifenfreiheit eigentlich nur dadurch zu realisieren, dass jeder Netzwerkknoten der Netzwerktopologie direkt mit jedem beliebigen anderen Netzwerkknoten dieser Topologie verbunden wird. Dies ist aber bei bereits bestehenden Netzwerktopologien nicht der Fall. Zwar könnten bereits bestehende Netzwerktopologien um entsprechende Glasfaserkabeltrassen ergänzt werden, jedoch wäre auch hiermit ein hoher finanzieller Aufwand verbunden, welcher den durch den Verzicht auf Filter (Multiplexer/Demultiplexer beziehungsweise ROADMs) erlangten Kostenvorteil in nachteiliger Weise wieder kompensieren oder gar überkompensieren würde.

Aufgabe der Erfindung ist es daher, ein Verfahren anzugeben, welches die Auslegung eines filterlosen optischen Netzes in einer bestehenden optischen Netzwerktopologie in glasfasersparender Weise unter Berücksichtigung der für filterlose Netze bestehenden Randbedingungen und bei gleichzeitiger Realisierung eines fehlertoleranten Netzes ermöglicht. Hierbei soll das zur Lösung der Aufgabe anzugebende Verfahren dazu dienen, die für die Realisierung eines solchen filterlosen optischen Netzes zu verwendenden Glasfaserkabeltrassen der bestehenden optischen Netzwerktopologie zu ermitteln.

Die Aufgabe wird durch ein Verfahren mit den Merkmalen des Patentanspruchs 1 gelöst. Vorteilhafte Aus- beziehungsweise Weiterbildungen der Erfindung sind durch die Unteransprüche gegeben.

Das nachfolgend beschriebene Verfahren geht von der Realisierung eines filterlosen optischen Netzes in einer bereits bestehenden optischen Netzwerktopologie aus Netzwerkknoten und diese Netzwerkknoten miteinander verbindenden Glasfaserkabeltrassen aus. In den vorgenannten Glasfaserkabeltrassen wird dabei jeweils mindestens ein aus mehreren Glasfasern bestehendes Glasfaserkabel geführt. In einer solchen optischen Netzwerktopologie werden im Zuge ihrer Nutzung für ein filterloses optisches Netz die bisher vorgesehenen Multiplexer/Demultiplexer oder ROADMs, bei denen es sich um aktive Netzwerkelemente handelt, durch passive Netzwerkelemente, nämlich Koppler und Splitter ersetzt. Ein von einem Netzwerkknoten ausgesendeter Signalstrom, also ein mit Datenpaketen moduliertes optisches Trägersignal, wird in das Netz über einen oder mehrere, gewissermaßen als optische Y-Kabel ausgebildete Koppler eingespeist. Die Einspeisung ist dabei derart, dass der ausgesendete Signalstrom an dem betreffenden Netzwerkknoten mittels der zuvor genannten Koppler in alle diese Netzwerkknoten mit anderen Netzwerkknoten der Topologie verbindende Glasfaserkabeltrassen eingespeist wird. Dies ist schleifenfrei zunächst dadurch möglich, dass die genannten Koppler Signalströme nur in einer Richtung, nämlich in der Senderichtung, passieren lassen, so dass ein ausgesendeter Signalstrom durch den ihn aussendenden Netzwerkknoten nicht wieder empfangen werden kann und somit keine zu Interferenzen führende Schleife gebildet wird.

Der Empfang von Signalströmen durch einen für ihren Empfang bestimmten Netzwerkknoten erfolgt über die bereits genannten Splitter. Mittels dieser Splitter wird jeweils ein Anteil aller über die bei einem Netzwerkknoten zusammentreffenden Glasfaserkabel empfangenen, jeweils aus Trägersignal und Nutzdaten bestehenden Signalströme einem Netzelement des betreffenden Netzwerkknotens zugeleitet sowie der verbliebene Anteil an die übrigen in der Senderichtung mit diesem Netzwerknoten verbundenen Netzwerkknoten weitergeleitet. Tatsächlich empfangen, im Sinne eines Auskoppelns aus dem Netz, wird ein jeweiliger Signalstrom beziehungsweise Datenstrom mit Nutzdaten nur durch ein auf die entsprechende Wellenlänge eingestelltes Netzelement des für den Empfang bestimmten Netzwerkknotens. Zwischen dem letztgenannten Netzelement und den einzelnen Splittern sind optische Schalter angeordnet, so dass der Empfang des betreffenden Datenstroms mit den Nutzdaten durch das Netzelement zur Sicherstellung der Schleifenfreiheit nur über das jeweils durch die Schalterstellung des Schalters bestimmte Glasfaserkabel und dessen Splitter erfolgt. Wird dieses Glasfaserkabel beziehungsweise die Glasfaserkabeltrasse, in der das Glasfaserkabel geführt ist, unterbrochen, so schaltet der optische Schalter den Signalweg beziehungsweise Datenpfad um, indem er auf eine andere den zu empfangenden Signalstrom über ein Glasfaserkabel übertragende Trasse mit dem zugehörigen Splitter umschaltet.

Unter dieser Prämisse ist daher ein optisches Netz beim Design so auszulegen, dass es zumindest einen, alle Netzwerkknoten miteinander verbindenden schleifenfreien Datenpfad durch die Netzwerktopologie gibt, welcher im Falle des Auftretens von Unterbrechungen oder Störungen durch mindestens einen weiteren Datenpfad gewissermaßen geschützt wird. Hierbei ist jedoch zu beachten, dass im Falle einer Nutzung einer zwei Netzwerkknoten miteinander verbindenden Glasfaserkabeltrasse zur Realisierung sowohl des ersten vorgenannten als auch des für seinen Schutz vorgesehenen Datenpfades keine echte Ausfallsicherheit gegeben ist. Sofern nämlich der betreffende Netzwerkabschnitt beziehungsweise die zwei Knoten miteinander verbindende Glasfaserkabeltrasse, beispielsweise im Zusammenhang mit Bauarbeiten versehentlich durch einen Bagger oder dergleichen zertrennt wird, wirkt sich dies gleichermaßen auf den ersten, ursprünglich für die Datenübertragung vorgesehenen Datenpfad als auch auf den eigentlich für dessen Schutz vorgesehenen anderen Datenpfad aus. Man spricht in einem solchen Fall von einer sogenannten Shared Risk Link Group (SRLG), da die für die Übertragung vorgesehenen Datenpfade hierbei in dem Abschnitt der zwischen zwei Netzwerkknoten gemeinsam genutzten Glasfaserkabeltrasse ein gemeinsames Ausfallrisiko miteinander teilen. Dem hat das nachfolgend genauer darzustellende Verfahren im Hinblick auf die angestrebte fehlertolerante Auslegung beziehungsweise Realisierung eines filterlosen Netzes innerhalb einer bereits bestehenden optischen Netzwerktopologie Rechnung zu tragen.

Um ein fehlertolerantes filterloses optisches Netz innerhalb einer bereits bestehenden Topologie bei gleichzeitiger Beachtung der Randbedingung der Schleifenfreiheit zu erhalten, wird für ein Verfahren zur Auslegung eines solchen optischen Netzes erfindungsgemäß folgende Vorgehensweise vorgeschlagen:
a) Zunächst wird die bereits bestehende optische Netzwerktopologie in einem Graphen abgebildet, in welchem die Netzwerkknoten durch Knoten des Graphen und die Netzwerkknoten miteinander verbindende Glasfaserkabeltrassen durch Kanten des Graphen dargestellt werden. Hierbei wird auf in den Systemen zur Verwaltung der bestehenden optischen Netzwerktopologie üblicherweise bereits vorhandene, beispielsweise in Form von Datenbankeinträgen ausgebildete, die Netzwerktopologie beschreibende Datenstrukturen zurückgegriffen. Diese, die bestehende Netzwerktopologie in Form entsprechender Parameter beschreibenden Datenstrukturen werden in den zuvor beschriebenen Graphen umgerechnet.
b) Die für die Erstellung des die bestehende Netzwerkstruktur abbildenden Graphen genutzten Datenstrukturen werden in den sie haltenden Systemen der Netzwerktopologie durch Zähler ergänzt. Hierbei wird in diese Datenstruktur für jede Kante des zuvor erzeugten Graphen ein Zähler eingerichtet. Alle neu in die Datenstrukturen aufgenommenen Zähler werden mit einem einheitlichen Anfangswert - vorzugsweise mit "0" - initialisiert.
c) In dem die bereits bestehende Netzwerktopologie beschreibenden Graphen wird dann ein optimaler Spannbaum aufgespannt, welcher alle Knoten des Graphen als Arbeitsspannbaum schleifenfrei miteinander verbindet. Zu den dabei in Betracht kommenden Optimierungskriterien für den errechneten Arbeitsspannbaum sollen nähere Ausführungen an späterer Stelle erfolgen. Die Zähler aller für die Erstellung des vorgenannten Arbeitsspannbaums genutzten Kanten des Graphen werden außerdem innerhalb der mit ihnen ergänzten Datenstrukturen inkrementiert.
d) Anschließend werden ein optimaler, ebenfalls alle Knoten des Graphen schleifenfrei miteinander verbindender Ersatzspannbaum erstellt und die Zähler der dafür verwendeten Kanten des Graphen ebenfalls inkrementiert. Die Optimierungskriterien für diesen Ersatzspannbaum entsprechen denen des Arbeitsspannbaums und werden demnach, wie bereits ausgeführt, an späterer Stelle erläutert. Ungeachtet dessen erfolgt in jedem Falle die Erstellung beziehungsweise Berechnung des Ersatzspannbaums mit der Maßgabe, dass mit diesem Ersatzspannbaum nur solche Knoten des Graphen unter Verwendung bereits zuvor zur Ausbildung eines Spannbaums (des Arbeitsspannbaums oder eines anderen, bereits zuvor errechneten Ersatzsspannbaums) genutzter Kanten verbunden werden, die unter ausschließlicher Verwendung bisher nicht genutzter Kanten nicht mit diesem Ersatzspannbaum verbindbar wären. Die Erstellung des Ersatzspannbaums erfolgt ferner mit der Maßgabe, dass zur Verbindung der letztgenannten, anders nicht mit dem Ersatzspannbaum verbindbaren Knoten die bereits genutzten Kanten verwendet werden, welche bis hierhin, das heißt bis zur Durchführung des an dieser Stelle in Rede stehenden Schrittes in dem Verfahrensablauf, den niedrigsten Zählerwert aufweisen.
e) Der zuletzt beschriebenen Verfahrensschritt d) wird so lange wiederholt, bis der bis dahin höchste Zählerwert aller für die Kanten geführten Zähler weder durch diesen selbst noch durch einen anderen Zähler überschritten wird. Im Zusammenhang mit diesem, sich auf die Wiederholung des vorhergehenden Verfahrensschrittes d) beziehenden Verfahrensschritt wird erkennbar, dass es sich bei dem in dem Verfahrensschritt d) genannten "bereits zuvor zur Ausbildung eines Spannbaums genutzten Kanten" um Kanten handelt, welche entweder bereits für den Arbeitsspannbaum oder in einem vorhergehenden Durchlauf des Verfahrensschrittes d) für die Erstellung eines Ersatzspannbaumes genutzt wurden.

Die Ausführung der vorstehend beschriebenen Verfahrensschritte erfolgt bei einer Nutzung des Verfahrens zum Zweck der Auslegung eines Netzes, das heißt bei der gewissermaßen erstmaligen Konfiguration des betreffenden Netzes, zum Beispiel mittels eines entsprechend programmierten Computersystems, welches Zugriff auf die Systeme zur Verwaltung der bestehenden Netzwerktopologie beziehungsweise auf die in diesen Systemen beispielsweise in Form von Datenbankeinträgen gehaltenen, die Netzwerktopologie beschreibenden Datenstrukturen hat. Bei der Umsetzung und Anwendung eines in der zuvor beschriebenen Weise ausgelegten filterlosen Netzes wird durch jeden einen Signalstrom beziehungsweise Datenstrom mit Nutzdaten empfangenden Netzwerkknoten für den Empfang des Datenstroms- durch entsprechende Ansteuerung des bereits erwähnten optischen Schalters - ein Glasfaserkabel genutzt, dessen Trasse durch eine zum Arbeitsspannbaum gehörende Kante des Graphen abgebildet wird. Nur, wenn hier eine Störung auftritt, schaltet der optische Schalter auf ein Glasfaserkabel einer anderen Trasse um, welche durch eine zu einem Ersatzbaum gehörende Kante des Graphen abgebildet wird.

Soweit im Zusammenhang mit der vorstehenden grundsätzlichen Erläuterung des erfindungsgemäßen Verfahrens gemäß den Schritten c) und d) ein optimaler Spannbaum, nämlich ein Arbeitsspannbaum oder ein Ersatzspannbaum, erstellt wird, kommen für das Kriterium "optimal" insbesondere zwei Ausgestaltungsformen des Verfahrens in Betracht. Entsprechend einer ersten dieser beiden Möglichkeiten wird ein optimaler Arbeitsspannbaum beziehungsweise ein optimaler Ersatzspannbaum dadurch erstellt, dass der betreffende Spannbaum als ein minimaler Spannbaum im Sinne der Graphentheorie ausgebildet wird. Es handelt sich hierbei um einen Spannbaum, in welchem alle Knoten des Graphen durch eine minimale Anzahl von Kanten verbunden werden. Es sei in diesem Zusammenhang nochmals darauf hingewiesen, dass es bei der Verbindung von Knoten innerhalb eines Spannbaums nicht darum geht, jeden Knoten mit jedem Knoten des Graphen zu verbinden. Dies gilt, jedenfalls aus graphentheoretischer Sicht, also unter Außerbetrachtlassung der Tatsache, dass die realen Netzwerkknoten im Hinblick auf die Aussendung von Signalströmen mit nur in einer Richtung passierbaren Kopplern ausgestattet sind, zumal hierdurch die Randbedingung beziehungsweise das Erfordernis der Schleifenfreiheit verletzt würde.

Eine andere Möglichkeit der Optimierung der jeweils zu erzeugenden Spannbäume (Arbeitsspannbaum und ein oder mehrere Ersatzspannbäume) besteht darin, dass diese unter jeweils vorzugsweiser Verwendung derjenigen Kanten des Graphen gebildet werden, durch welche in dem Graphen Glasfaserkabeltrassen abgebildet werden, deren Glasfasern während des bisherigen Betriebs der bestehenden Netzwerktopologie für die Datenübertragung am geringsten belastet waren. Insoweit werden beispielsweise zunächst Glasfaserkabeltrassen zur Verbindung außerhalb von Ballungsräumen gelegener Knoten verwendet, da diese üblicherweise weniger stark belastet sind.

Die zuletzt beschriebene Ausbildungsform des Verfahrens macht es sich zunutze, dass in den Systemen von Betreibern entsprechender optischer Netzwerktopologien beziehungsweise in Systemen zur Verwaltung dieser Topologien und in den von diesen gehaltenen Datenstrukturen zur Beschreibung der jeweiligen Topologie ohnehin bereits Parameter verwaltet werden, welche Indikatoren für die jeweilige Belastung der einzelnen Glasfasern des Netzwerks ausbilden. Im einfachsten Fall handelt es sich auch hierbei um entsprechende Zähler für die einzelnen Glasfasern. Die entsprechenden Parameter werden für die Erstellung eines jeweiligen, als optimal anzusehenden Spannbaums herangezogen. Auch hierbei wird der jeweilige Spannbaum selbstverständlich unter Verwendung einer möglichst geringen Zahl von Kanten (jedoch im Regelfall nicht unter Verwendung der geringstmöglichen Kantenzahl) gebildet, wobei vorrangig zunächst immer diejenigen Kanten Berücksichtigung finden, die gemäß der in den Systemen zur Verwaltung der Netzwerktopologie geführten Datenstrukturen die geringste Belastung aufweisen.

Gemäß einer besonders vorteilhaften Weiterbildung des Verfahrens können, unter der Voraussetzung einer entsprechend geeigneten Ausbildung der Netzelemente der für das filterlose Netz genutzten Netzwerktopologie und von diesen verarbeiteter Softwarekomponenten, die zuvor beschriebenen Verfahrensabläufe automatisiert gestaltet werden. Hierbei kann es vorgesehen sein, dass im Falle einer ständig sehr hohen Belastung, nämlich bei einer dauerhaften Überbelastung, der das filterlose Netz ausbildenden Spannbäume beziehungsweise von Glasfaserkabeln in den die Kanten solcher Spannbäume ausbildenden Glasfaserkabeltrassen der dargestellte Iterationsprozess zum Zweck einer Erweiterung des bestehenden optischen Netzes um einen zusätzlichen Arbeitsspannbaum sowie um mindestens einen Ersatzspannbaum für diesen weiteren Arbeitsspannbaum automatisch angestoßen wird. Zur Feststellung einer entsprechenden Belastung könnten in diesem Falle die bereits angesprochenen, die Belastung der einzelnen Glasfasern beschreibenden Parameter innerhalb der Datenstrukturen zur Verwaltung der Netzwerktopologie verwendet werden. Bei einer automatisierten Verfahrensgestaltung könnten hierzu entsprechende Parameter beziehungsweise Zähler mittels einer durch die Systeme der Netzwerktopologie beziehungsweise deren Netzelemente verarbeiteten Software im Rahmen eines Monitoring auf das Überschreiten von Schwellwerten überprüft werden und im Falle des Feststellens einer dauerhaften Überschreitung auf der Grundlage eines Regelwerks der Iterationsprozess zur Erweiterung des bis dahin bestehenden filterlosen Netzes angestoßen werden.

Es ist allerdings natürlich nicht sinnvoll, das optische Netz im Falle eines einmaligen oder gelegentlichen, gegebenenfalls situationsbedingten Auftretens von Überlastungen einzelner Glasfasern beziehungsweise Glasfaserkabel gewissermaßen zu rekonfigurieren und um einen weiteren Arbeitsspannbaum sowie um mindestens einen Ersatzspannbaum für diesen zusätzlichen Arbeitsspannbaum zu ergänzen. Vielmehr gilt es, einen solchen Automatismus so zu gestalten, dass entsprechendes erst dann erfolgt, wenn eine dauerhafte Überbelastung einzelner Teile des optischen Netzes in seiner bisherigen Form festgestellt wird. So kann beispielsweise definiert werden, dass eine solche dauerhafte Überbelastung gegeben ist, wenn die Mittelwerte der Benutzung eines Glasfaserkabels beim Betrieb des Netzes in einer festgelegten Anzahl aufeinanderfolgender Beobachtungsperioden über einem bestimmten Schwellwert liegen. Ohnehin wird das Anstoßen des Iterationsvorgangs, das heißt eine automatisiert gestartete erneute Ausführung des erfindungsgemäßen Verfahrens zur Erweiterung des bestehenden Netzes, wie bereits angedeutet, eher das Resultat der Ausführung eines komplexeren Regelwerkes sein. Ein entsprechendes Regelwerk, dessen Ausgestaltung nicht zuletzt von der jeweiligen konkreten Beschaffenheit der zugrundeliegenden Netzwerktopologie abhängig sein wird, soll jedoch im Rahmen dieser Erfindung nicht Gegenstand weiterer Betrachtungen sein.

Bei der Erweiterung des filterlosen Netzes wird vorzugsweise von dem nach der letzten Durchführung des Iterationsprozesses bestehenden Status ausgegangen. Dabei werden unter Auslassung der in dem filterlosen optischen Netz für den schon bestehenden Arbeitsspannbaum oder die bestehenden Arbeitsspannbäume bisher bereits genutzten Kanten ein neuer Arbeitsspannbaum kreiert und dann in der bereits grundsätzlich zum Verfahren beschriebenen Vorgehensweise, also unter erneuter Durchführung des beschriebenen Iterationsprozesses, zu diesem neuen Arbeitsspannbaum ein oder mehrere Ersatzspannbäume gebildet beziehungsweise errechnet.

Anhand von Zeichnungen soll nachfolgend ein Ausführungsbeispiel für das erfindungsgemäße Verfahren erläutert werden. Die Zeichnungen zeigen im Einzelnen:
- Fig. 1:: den Graphen einer beispielhaften Netzwerktopologie,
- Fig. 2:: einen in dem Graphen gemäß Fig. 1 aufgespannten Arbeitsspannbaum,
- Fig. 3:: einen in dem Graphen gemäß Fig. 1 aufgespannten Ersatzspannbaum für den Arbeitsspannbaum gemäß Fig. 2,
- Fig. 4:: den Ersatzspannbaum gemäß Fig. 3, vervollständigt durch Anbindung zuvor mit ihm nicht verbundener Knoten,
- Fig. 5:: einen weiteren vollständigen Ersatzspannbaum für den Arbeitsspannbaum gemäß Fig. 2.

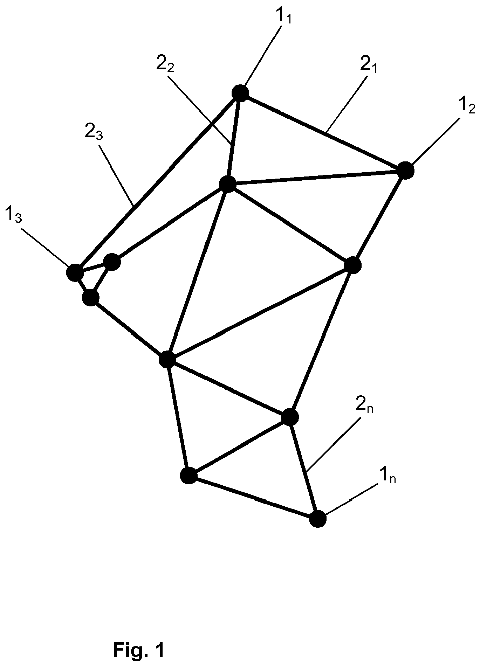

Die Fig. 1 zeigt den zur Abbildung einer beispielhaften, bereits bestehenden optischen Netzwerktopologie erstellten Graphen. Bei der Netzwerktopologie handelt es sich beispielsweise um einen optischen Backbone. Die durch Punkte symbolisierten Knoten 1₁ - 1ₙ des Graphen bezeichnen hierbei Netzwerkknoten der beispielhaft zugrunde gelegten optischen Netzwerktopologie. Die sie miteinander verbindenden Geraden, nämlich die Kanten 2₁ - 2ₙ des Graphen, bilden die in der zugrunde gelegten Netzwerktopologie vorhandenen, deren Netzwerkknoten, das heißt einzelne Standorte der Topologie, miteinander verbindende Glasfaserkabeltrassen ab. Im Hinblick auf das gemäß dem vorgeschlagenen Verfahren erfolgende Design eines filterlosen optischen Netzes wird in dem hier veranschaulichten Ausführungsbeispiel davon ausgegangen, dass in den Netzwerkknoten der durch den Graphen abgebildeten Netzwerktopologie zuvor vorhandene Multiplexer/Demultiplexer oder ROADMs bereits durch passive Koppler und Splitter ersetzt wurden.

Für den in der Fig. 1 gezeigten Graphen werden in einem nächsten Verfahrensschritt in Systemen zur Verwaltung der zugrunde gelegten Netzwerktopologie gehaltenen Datenstrukturen, welche die Netzwerktopologie hinsichtlich der geographischen Lokalisierung ihrer Netzwerkknoten (also der Netzwerkstandorte) und die Art und Weise der Verbindung dieser Netzwerkknoten durch Glasfaserkabeltrassen beschreiben, Zähler für jede der Kanten 2₁ - 2ₙ des Graphen eingepflegt. Die entsprechenden Zähler werden zur Initialisierung auf den Wert "0" gesetzt.

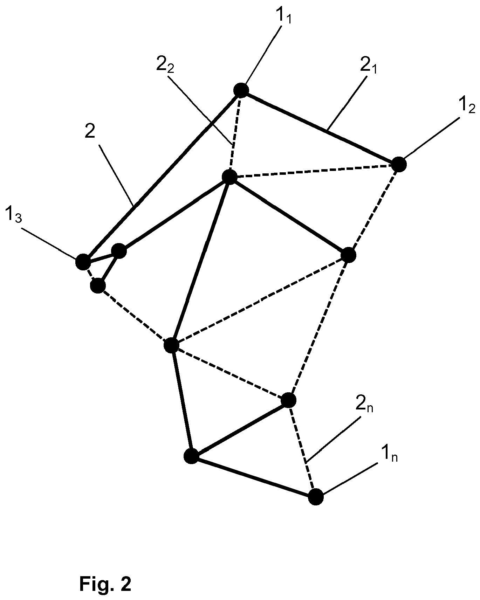

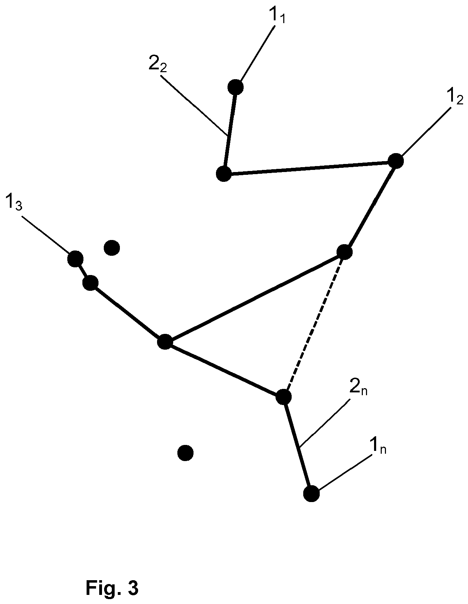

In einem sich anschließenden Verfahrensschritt wird in dem in der Fig. 1 gezeigten Graphen ein optimierter, nämlich vorzugsweise ein im Sinne der Graphentheorie minimaler Spannbaum als Arbeitsspannbaum aufgespannt. Ein Arbeitsspannbaum ist in der Fig. 2 dargestellt. An dieser Stelle sei allerdings angemerkt, dass aus Vereinfachungsgründen in dem hier erläuterten Beispiel auf eine tatsächliche Optimierung des Arbeitsspannbaumes bewusst verzichtet wurde, so dass es sich bei dem gezeigten Spannbaum nicht zwingend um einen minimalen Spannbaum handelt. Entsprechendes gilt für die in den nachfolgend erläuterten Zeichnungen gezeigten Ersatz- beziehungsweise Schutzspannbäume. Jedoch gelten Verfahren zur Erstellung eines im Sinne der Graphentheorie minimalen Spannbaums und deren softwaretechnische Umsetzung als solches als Stand der Technik, so dass es hierzu keiner stärker ins Detail gehenden Darstellungen bedarf. Zudem könnten die in den Figuren jeweils gezeigten Spannbäume auch unter Berücksichtigung der bisher für die Kanten 2₁ - 2ₙ beziehungsweise für die durch sie abgebildeten Glasfaserkabeltrassen festgestellte Belastung optimiert worden sein, so dass es sich insoweit ohnehin nicht zwingend um einen minimalen Spannbaum handeln muss. In der Darstellung zeigen die durchgezogenen Linien die für den Arbeitsspannbaum genutzten Kanten 2₁ - 2ₙ. Die übrigen, nicht den Arbeitsspannbaum genutzten Kanten 2₁ - 2ₙ sind gestrichelt dargestellt. Entsprechendes gilt auch jeweils für die in den Figuren 3 bis 5 dargestellten Ersatzspannbäume, für welche ebenfalls nur jeweils mit durchgezogener Linie dargestellte Kanten 2₁ - 2ₙ des Graphen verwendet werden.

Bei den gemäß der Fig. 1 nicht genutzten Kanten 2₁ - 2ₙ handelt es sich, wie bereits ausgeführt, um Kanten 2₁ - 2ₙ, die nicht für den an dieser Stelle des Verfahrens erstellten Arbeitsspannbaum, regelmäßig aber für mindestens einen der nachfolgend zu erstellenden, bei Störungen im Arbeitsspannbaum verwendeten Ersatzspannbäume genutzt werden. Nur hypothetisch ist es dabei denkbar, dass bei Anwendung des erfindungsgemäßen Verfahrens auf eine bestehende Topologie eine Kante 2₁ - 2ₙ weder im Arbeitsspannbaum noch in dem Ersatzspannbaum beziehungsweise in den Ersatzspannbäumen genutzt wird. In der Praxis wird dies im Grunde nicht vorkommen. Wenn aber doch, so bedeutet dies nicht, dass eine solche Kante 2₁ - 2ₙ überhaupt nicht für den Zweck einer optischen Datenübertragung genutzt wird. Vielmehr würde die betreffende Kante 2₁ - 2ₙ dann lediglich nicht als Teil des Backbones genutzt werden. Sie könnte aber stattdessen beispielsweise durch Geschäftskunden, insbesondere durch größere Firmen gewissermaßen als Standleitung zwischen zwei Standorten zum Zweck der optischen Datenübertragung genutzt werden. Die Nichtnutzung einer Kante 2₁ - 2ₙ innerhalb eines Spannbaums ist dadurch gegeben, dass am empfängerseitigen Knoten der betreffenden Kante 2₁ - 2ₙ (so lange der betreffende und nicht ein anderer Spannbaum genutzt wird) der beziehungsweise die schon mehrfach erwähnten Schalter unter keinen Umständen eine Schalterstellung einnehmen, bei welcher an diese Knoten eine Auskopplung eines Nutzdaten transportierenden Trägersignals erfolgt.

Wie die Fig. 2 zeigt, sind in dem Arbeitsspannbaum alle Knoten 1₁ - 1ₙ des Graphen durch Kanten 2₁ - 2ₙ untereinander schleifenfrei verbunden. Übertragen auf die zugrunde liegende Netzwerktopologie bedeutet dies, dass unter Nutzung eines entsprechenden Arbeitsspannbaums für ein filterloses optisches Netz ein von einem beliebigen Netzwerkknoten dieses Netzes ausgesendeter Signalstrom jeden anderen Netzwerkknoten des Netzes erreicht. Letzteres ist jedoch nicht damit gleichzusetzen, dass der entsprechende Signalstrom auch durch jeden dieser Netzwerkknoten in dem Sinne tatsächlich empfangen würde, dass er an einem jeweiligen Netzwerkknoten ausgekoppelt werden könnte. Der Signalstrom wird in diesem Sinne vielmehr lediglich durch den bestimmungsgemäßen Netzwerkknoten empfangen, welcher im Hinblick auf die für sein Trägersignal verwendete Wellenlänge hierauf entsprechend eingestellt ist. Hierdurch lässt sich jeweils eine Punkt-zu-Punkt-Verbindung von einem beliebigen Netzwerkknoten der Netzwerktopologie zu einem beliebigen anderen Netzwerkknoten dieser Topologie aufbauen. Welcher Netzwerkknoten durch eine solche Punkt-zu-Punkt-Verbindung mit welchem Netzwerkknoten verbunden ist, hängt hierbei jeweils von der Wellenlänge des für die Verbindung genutzten Licht- beziehungsweise Trägersignals ab. Im Zusammenhang mit der Erstellung des in der Fig. 2 gezeigten Arbeitsspannbaumes werden alle in den Datenstrukturen zur Verwaltung der Netzwerktopologie geführten Zähler für die in dem Arbeitsspannbaum verwendeten Kanten 2₁ - 2ₙ inkrementiert, also auf "1" erhöht.

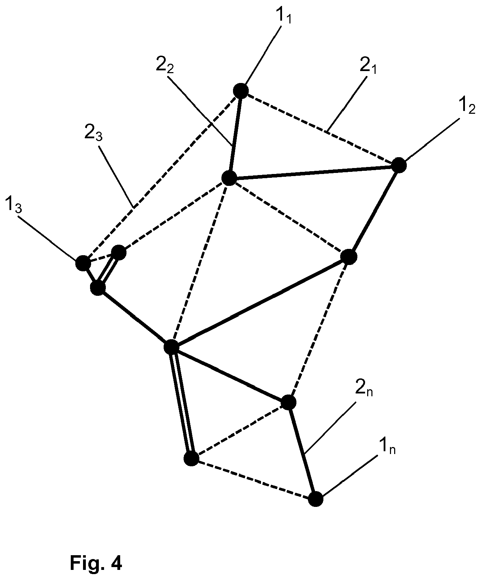

In dem nächsten, durch die Fig. 3 und 4 hinsichtlich seines Ergebnisses veranschaulichten Verfahrensschritt wird für den Arbeitsspannbaum gemäß Fig. 2 ein Ersatzspannbaum aufgespannt. Es handelt sich bei dem in der Fig. 3 gezeigten, Ersatzspannbaum um einen Spannbaum, welcher vollständig disjunkt zu dem Arbeitsspannbaum gebildet ist. Das heißt, zur Bildung des in dieser Phase des Verfahrens ersichtlich noch unvollständigen Ersatzspannbaums werden ausnahmslos solche Kanten 2₁ - 2ₙ des Graphen herangezogen, welche nicht für den Arbeitsspannbaum genutzt werden. Die insoweit für die Ausbildung des unvollständigen Ersatzspannbaums zu verwendenden Kanten 2₁ - 2ₙ sind demnach Kanten 2₁ - 2ₙ, deren Zähler noch den ursprünglichen Initialisierungswert "0" aufweisen und erst im Zuge ihrer Auswahl für den Ersatzspannbaum inkrementiert werden.

Hierbei zeigt sich jedoch, dass der entstehende Ersatzspannbaum nicht alle Knoten 1₁ - 1ₙ des Graphen einbezieht beziehungsweise nicht alle Knoten 1₁ - 1ₙ des Graphen mit diesem Ersatzspannbaum verbunden sind, weshalb dieser, wie bereits ausgeführt, noch unvollständig ist. Die demgemäß noch nicht an den Ersatzspannbaum angeschlossenen (im gezeigten Beispiel zwei) Knoten 1₁ - 1ₙ können, wie erkennbar, mit dem Ersatzspannbaum nur unter Verwendung von Kanten 2₁ - 2ₙ verbunden werden, welche bereits Bestandteil des Arbeitsspannbaums sind und demnach vor der Erstellung eines vollständigen, alle Knoten 1₁ - 1n einbeziehenden Ersatzspannbaums zunächst noch mit dem Zählerwert "1" belegt sind.

Im Zuge der Erstellung des unvollständigen Ersatzspannbaums gemäß Fig. 3 und seiner Vervollständigung gemäß Fig. 4 werden wiederum alle hierfür verwendeten Kanten 2₁ - 2ₙ hinsichtlich ihres Zählerwerts inkrementiert. Demnach weisen nach diesem Verfahrensschritt, welcher durch die Figuren 3 und 4 veranschaulicht ist, diejenigen Kanten 2₁ - 2ₙ, bezüglich welcher der Ersatzspannbaum disjunkt zu dem Arbeitsspannbaum ist, den Zählerwert "1" und demgegenüber die doppelt verwendeten Kanten 2₁ - 2ₙ den Zählerwert "2" auf.

Bei den sowohl für den Arbeitsspannbaum als auch für den Ersatzspannbaum gemäß der Fig. 4 verwendeten Kanten 2₁ - 2ₙ handelt es sich jedoch um Shared Risk Link Groups (SRLG). Dies heißt, sofern in dem Arbeitsspannbaum, beispielsweise durch Unterbrechung einer Glasfaserkabeltrasse, welche mit einer doppelt verwendeten Kante 2₁ - 2ₙ des die Netzwerktopologie abbildenden Graphen assoziiert ist, eine Störung auftritt, ist mit hoher Wahrscheinlichkeit auch der eigentlich zum Schutz des Arbeitsspannbaums vorgesehene und insoweit auch als "Schutzspannbaum" bezeichnete Ersatzspannbaum gemäß Fig. 4 in diesem Abschnitt gestört. Demgemäß ist in dieser Konfiguration der Arbeitsspannbaum noch nicht vollständig geschützt beziehungsweise das gebildete filterlose Netz noch nicht vollständig fehlertolerant. Daher ist es erforderlich, einen weiteren Ersatzspannbaum zu erstellen, welcher gegebenenfalls auch doppelt verwendete, nämlich durch ihn selbst und den Arbeitsspannbaum verwendete Kanten 2₁ - 2ₙ aufweist, bei dem jedoch die doppelt verwendeten Kanten 2₁ - 2ₙ nicht mit den doppelt verwendeten Kanten 2₁ - 2ₙ des ersten Ersatzspannbaums gemäß der Fig. 4 identisch sind. Daher bleiben Kanten des weiteren Ersatzspannbaums, die bereits den Zählerwert "2" aufweisen, außer Betracht, werden also gewissermaßen "gedanklich" gestrichen. Zur Erstellung dieses Ersatzspannbaums werden demnach jeweils die Kanten genutzt, deren Zähler bis hierher einen möglichst niedrigen Zählerwert, aber jedenfalls einen gegenüber dem gestrichenen Zählerwert niedrigeren Zählerwert aufweisen.

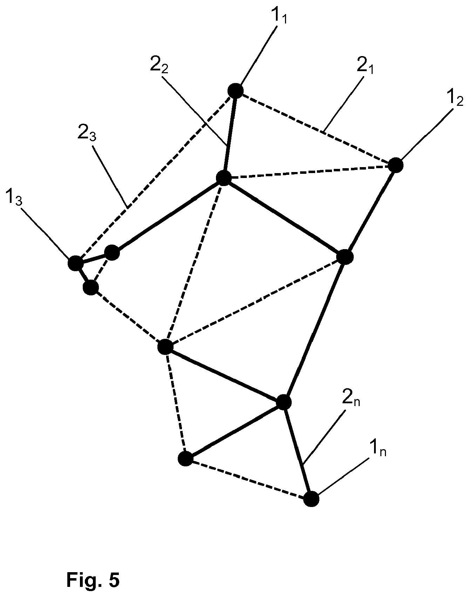

Ein in der zuvor erläuterten Weise erstellter weiterer Ersatzspannbaum ist in der Fig. 5 gezeigt. Mit der Erstellung dieses Ersatzspannbaums ist ein vollständig fehlertolerantes filterloses Netz realisiert, so dass der als Iteration anzusehende Verfahrensablauf zur Erstellung des Arbeitsspannbaums und eines oder mehrerer (hier mehrerer, nämlich zwei) Ersatzspannbäume beendet werden kann. Sollte sich hingegen, beispielsweise bei Zugrundelegung einer anderen Netzwerktopologie, kein zweiter Ersatzspannbaum finden lassen, für dessen Vervollständigung nicht auch bereits durch den Arbeitsspannbaum und den ersten Ersatzspannbaum verwendete Kanten 2₁ - 2ₙ genutzt werden müssen, würde sich ein weiterer Iterationsschritt anschließen.

Die Anzahl der gemäß dem zuvor ausführlich beschriebenen Verfahren jeweils erforderlichen Iterationsschritte lässt sich dabei sogar abschätzen. Diese Abschätzung lässt sich im Wege folgender Überlegungen und Gleichungen vornehmen:
Es sei angenommen, der die zugrundeliegende Netzwerktopologie abbildende Graph bestehe, wie bei dem zuvor erläuterten Beispiel, aus N Knoten und K Kanten, wobei im Weiteren zur sprachlichen Vereinfachung ausschließlich die im Kontext der Beschreibung bisher für den Graphen gebrauchten Begrifflichkeiten (Knoten und Kanten) verwendet werden sollen, also auch im Zusammenhang mit der physischen Netzwerktopologie. Um in einer solchen Netzwerktopologie die einzelnen Kanten überhaupt gegen Ausfälle schützen zu können, muss die Netzwerktopologie mindestens ein Ring sein. Das steht zwar im Widerspruch zu der Bedingung, dass filterlose optische Netze schleifenfrei sein müssen, ist aber für die Abschätzung zunächst irrelevant. Bei einem Ring aus N Knoten gibt es auch N Kanten (K = N). Der Vermaschungsgrad von Kommunikationsnetzen ist in der Regel aber höher, das heißt es gilt in der Regel K > N. In dem zuvor erläuterten Beispiel weist die Topologie beziehungswese deren Graph 11 Knoten und 18 Kanten auf, es gilt als N = 11 und K = 18. Um alle N Knoten in einem Baum zu verbinden, ohne dass ein Ringschluss entsteht, sind genau N - 1 Kanten erforderlich. Dies gilt für jeden gebildeten Spannbaum (Arbeitsspannbaum oder Ersatzspannbaum). Nachdem der Arbeitsspannbaum konstruiert beziehungsweise aufgespannt wurde, sind noch K - (N - 1) Kanten frei, die prinzipiell für den Ersatzspannbaum genutzt werden können. Im besten Fall müssen N -1 - [K - (N - 1)] = 2 (N - 1) - K viele Kanten aus dem Arbeitsspannbaum doppelt verwendet werden ("benötigte Anzahl Kanten -freie Anzahl Kanten"). Das ganzzahlig aufgerundete Verhältnis aus insgesamt zur Verfügung stehenden Kanten und den nach jedem Durchlauf noch freien Kanten gibt an, wie viele verschiedene Spannbäume man benötigt (A = Anzahl der Durchgänge beziehungsweise Anzahl der zu konstruierenden Spannbäume): A = Ganzzahl (K / (K - N + 1)). Für das gezeigte Ausführungsbeispiel eine Backbones gilt demnach A = 2,25, das heißt aufgerundet A = 3.

## Patentansprüche

1. Verfahren zur Auslegung filterloser optischer Netze im Hinblick auf die für ein jeweiliges innerhalb einer bestehenden optischen Netzwerktopologie fehlertolerant auszubildendes, filterloses optisches Netz zu verwendenden Glasfaserkabeltrassen der durch Netzwerkknoten und diese Netzwerkknoten miteinander verbindende, in den Glasfaserkabeltrassen geführte Glasfasern gegebenen Netzwerktopologie, umfassend die Schritte
a.) Abbilden der bestehenden Netzwerktopologie in einem Graphen, in welchem die Netzwerkknoten durch Knoten (1₁ - 1ₙ) des Graphen und die die Netzwerkknoten verbindenden Glasfaserkabeltrassen durch Kanten (2₁ - 2ₙ) des Graphen dargestellt werden,
b.) Ergänzen von in Systemen zur Verwaltung der bestehenden Netzwerktopologie gehaltenen, die Netzwerktopologie beschreibenden Datenstrukturen durch je einen Zähler für jede Kante (2₁ - 2ₙ) des Graphen und Initialisierung der Zähler,
c.) Ausbilden eines optimalen, alle Knoten (1₁ - 1ₙ) des Graphen schleifenfrei miteinander verbindenden Arbeitsspannbaums sowie Inkrementieren der Zähler der für den Arbeitsspannbaum verwendeten Kanten (2₁ - 2ₙ) des Graphen,
d.) Ausbilden eines optimalen, alle Knoten (1₁ - 1ₙ) des Graphen schleifenfrei miteinander verbindenden Ersatzspannbaums sowie Inkrementieren der Zähler der dafür verwendeten Kanten (2₁ - 2ₙ) des Graphen, mit der Maßgabe, dass mit diesem Ersatzspannbaum nur solche Knoten (1₁ - 1ₙ) des Graphen unter Verwendung bereits zuvor zur Ausbildung eines Spannbaums genutzter Kanten (2₁ - 2ₙ) verbunden werden, die unter ausschließlicher Verwendung bisher nicht genutzter Kanten (2₁ - 2ₙ) nicht mit diesem Ersatzspannbaum verbindbar sind und dass zur Verbindung der anders nicht mit diesem Ersatzspannbaum verbindbaren Knoten (1₁ - 1ₙ) die bereits genutzten Kanten (2₁ - 2ₙ) verwendet werden, welche bis dahin den niedrigsten Zählerwert aufweisen,
e.) Wiederholung des Verfahrensschrittes d.) solange, bis der bis dahin höchste Zählerwert nicht mehr überschritten wird.

2. Verfahren nach Anspruch 1, **dadurch gekennzeichnet, dass** der optimale Arbeitsspannbaum gemäß Schritt a.) und/oder der jeweilige optimale Ersatzspannbaum gemäß Schritt b.) als minimaler Spannbaum ausgebildet wird.

3. Verfahren nach Anspruch 1, **dadurch gekennzeichnet, dass** der optimale Arbeitsspannbaum gemäß Schritt a.) und/oder der jeweilige optimale Ersatzspannbaum gemäß Schritt b.) unter jeweils vorzugsweiser Verwendung derjenigen Kanten (2₁ - 2ₙ) des Graphen ausgebildet werden, durch welche in dem Graphen Glasfaserkabeltrassen abgebildet werden, deren Glasfasern während des bisherigen Betriebs der bestehenden Netzwerktopologie für die Datenübertragung am geringsten belastet sind, wobei hierzu in den durch die Systeme zur Verwaltung der Netzwerktopologie gehaltenen Datenstrukturen bereits existierende, die Belastung einer jeweiligen Glasfaser abbildende Parameter herangezogen werden.

4. Verfahren nach einem der Ansprüche 1 bis 3, **dadurch gekennzeichnet, dass** die bei der Nutzung eines in der optischen Netzwerktopologie bereits ausgebildeten filterlosen optischen Netzes auftretende Belastung der Glasfasern der Netzwerktopologie durch ein Monitoring diese Belastung in den Systemen zur Verwaltung der Netzwerktopologie abbildender Parameter erfasst und im Falle dabei festgestellter dauerhafter Überlastungen das Verfahren auf der Grundlage eines in den System gehaltenen Regelwerkes zur Ergänzung des optischen Netzes um einen weiteren Arbeitsspannbaum und um mindestens einen Ersatzspannbaum für diesen weiteren Arbeitsspannbaum automatisch erneut gestartet wird.
